# EUROPEAN PATENT APPLICATION

(11) **EP 4 503 665 A1**
(43) Date of publication of application: **05.02.2025**
(21) Application number: 23778317.0
(22) Date of filing: 29.03.2023
(51) Int. Cl.: H04W 4/06

(54) **MBS PROCESSING METHOD, MBS SENDING APPARATUS AND MBS RECEIVING APPARATUS**

(30) Priority: 30.03.2022 CN 202210330976
(71) Applicant: Shanghai National Engineering Research Center of Digital Television Co., Ltd., Shanghai 200125 (CN)
(72) Inventor: WANG, Tingting, Shanghai 200240 (CN); HE, Dazhi, Shanghai 200240 (CN); XU, Yin, Shanghai 200240 (CN); ZHANG, Wenjun, Shanghai 200240 (CN); HUANG, Yihang, Shanghai 200240 (CN); HONG, Hanjiang, Shanghai 200240 (CN); JIAO, Tianyu, Shanghai 200240 (CN); JU, Hao, Shanghai 200240 (CN)
(74) Representative: Potter Clarkson
(86) International application number: PCT/CN2023/084827
(87) International publication number: WO 2023/185952

(57) **Abstract**

Provided in the present application are an MBS processing method, an MBS receiving apparatus and an MBS sending apparatus. The MBS processing method comprises: a base station generating suspension information and sending the suspension information to a UE, wherein the suspension information is configured to instruct the UE to suspend all radio bearers associated with an MBS, or is configured to instruct the UE not to suspend all the radio bears associated with the MBS, or is configured to instruct the UE to suspend some of the radio bearers associated with the MBS and not to suspend the remaining radio bearers among all the radio bearers; and each radio bearer associated with the MBS is an MRB. Alternatively, the MBS processing method comprises: generating a RRCRelease message and sending the RRCRelease message to a UE, wherein the RRCRelease message comprises SuspendConfig information; and the RRCRelease message is configured to instruct the UE to suspend all radio bearers associated with an MBS, or is configured to instruct the UE not to suspend all the radio bearers associated with the MBS, or is configured to instruct the UE to suspend some of the radio bearers associated with the MBS and not to suspend the remaining radio bearers among all the radio bearers.

## Description

The present application claims priority to Chinese Patent Application No.202210330976.X, filed on March 30, 2022, the entire content of which is incorporated herein by reference.

### Technical Field

The present application relates to the field of communication technology, specifically to a processing method, a sending apparatus and a receiving apparatus for Multicast/Broadcast Service (MBS).

### Background

With the rapid development of 5th Generation Mobile Communication Technology (5G), the 3rd Generation Partnership Project (3GPP) R13 introduced the RRC_INACTIVE state in addition to the RRC_IDLE and RRC_CONNECTED states in Long Term Evolution (LTE) to consider signaling overhead and power consumption. In the RRC_INACTIVE state, user equipments (UEs) can not only reduce power consumption but also quickly access the network, meeting the highspeed rate requirements of 5G for the Internet of Things, reducing signaling overhead, and avoiding the issue of excessive signaling overhead resulting from numerous devices sporadically transmitting small amounts of data. The R15 specification of 5G continues the RRC_INACTIVE state introduced in R13, and in actual operation, the user equipment (UE) establishes a Radio Resource Control (RRC) connection and stays in the RRC_CONNECTED state afterward. It can transit to the RRC_INACTIVE state, or directly transit to the RRC_IDLE state, or transit to the RRC_INACTIVE state and then transit to the RRC_IDLE state based on actual operation conditions. In addition, the UE can transit to the RRC_CONNECTED state based on actual operation conditions when it is in the RRC_IDLE state or the RRC_INACTIVE state.

In related technologies, when the UE receives the RRC Release signaling and the RRC Release signaling includes the SuspendConfig information, it will transit from the RRC_CONNECTED state to the RRC_INACTIVE state, and suspend all SRBs (Signaling Radio Bearer) except SRB0 and all DRBs (Data Radio Bearer).

### Summary

The present application provides a processing method, a sending apparatus and a receiving apparatus for MBS, which resolves the aforementioned issues during MBS suspension..

The suspension method of an MBS, comprising:
a base station generating suspension information and sending the suspension information to a user equipment (UE), wherein the suspension information is configured to instruct the UE to suspend all radio bearers associated with a multicast/broadcast service (MBS), or is configured to instruct the UE not to suspend all the radio bears associated with the MBS, or is configured to instruct the UE to suspend some of all the radio bearers associated with the MBS and not to suspend the remaining radio bearers among all the radio bearers;
wherein, each radio bearer associated with the MBS is a multicast/broadcast radio bearer (MRB).

An MBS processing method, comprising:
a user equipment (UE) receiving suspension information;
the UE performing one of the following according to the suspension information: suspending all radio bearers associated with a multicast/broadcast service (MBS); not suspending all radio bearers associated with the MBS; suspending some of all the radio bearers associated with the MBS and not suspending the remaining radio bearers among all the radio bearers;
wherein, each radio bearer associated with the MBS is a multicast/broadcast radio bearer (MRB).

An MBS processing method, comprising:
a base station generating a Radio Resource Control Release (RRCRelease) message and sending the RRCRelease message to a user equipment (UE), wherein the RRCRelease message includes SuspendConfig information, the RRCRelease message is configured to instruct the UE to suspend all radio bearers associated with the MBS; or the RRCRelease message is configured to instruct the UE not to suspend all radio bearers associated with the MBS; or the RRCRelease message is configured to instruct the UE to suspend some of all the radio bearers associated with the MBS and not to suspend the remaining radio bearers among all the radio bearers;
wherein, each radio bearer associated with the MBS is a multicast/broadcast radio bearer (MRB).

An MBS processing method, comprising:
a user equipment (UE) receiving a Radio Resource Control Release (RRCRelease) message;
the UE determining whether the RRCRelease message includes SuspendConfig information, and in response to determining that the RRCRelease message includes the SuspendConfig information, the UE performing one of the following according to the RRCRelease message: suspending all radio bearers associated with a multicast/broadcast service (MBS); not suspending all radio bearers associated with the MBS; suspending some of all the radio bearers associated with the MBS and not suspending the remaining radio bearers among all the radio bearers;
wherein, each radio bearer corresponding to the MBS is a multicast/broadcast radio bearer (MRB).

A transmitting apparatus, applied to a base station, comprising:
a generating module configured to generate suspension information;
a transmitting module configured to send the suspension information to a user equipment (UE);
wherein, the suspension information is configured to instruct the UE to suspend all radio bearers associated with a multicast/broadcast service (MBS), or the suspension information is configured to instruct the UE not to suspend all radio bearers associated with the MBS, or the suspension information is configured to instruct the UE to suspend some of all the radio bearers associated with the MBS and not to suspend the remaining radio bearers among all the radio bearers;
wherein, each radio bearer associated with the MBS is a multicast/broadcast radio bearer (MRB).

A receiving apparatus, applied to a user equipment (UE), comprising:
a receiving module configured to receive suspension information;
a suspension module configured to perform one of the following according to the suspension information: suspending all radio bearers associated with a multicast/broadcast service (MBS); not suspending all radio bearers associated with the MBS; suspending some of all the radio bearers associated with the MBS and not suspending the remaining radio bearers among all the radio bearers;

Wherein, each radio bearer associated with the MBS is a multicast/broadcast radio bearer (MRB).

A transmitting apparatus, applied to a base station, comprising:
a generating module configured to generate a Radio Resource Control Release (RRCRelease) message;
a transmitting module configured to send the RRCRelease message to a user equipment (UE), wherein the RRCRelease message comprises SuspendConfig information, and the RRCRelease message is configured to instruct the UE to suspend all radio bearers associated with a multicast/broadcast service (MBS); or the RRCRelease message is configured to instruct the UE does not to suspend all radio bearers associated with the MBS; or the RRCRelease message is configured to instruct the UE to suspend some of the radio bearers associated with the MBS and not to suspend the remaining radio bearers among all the radio bearers;
wherein, each radio bearer associated with the MBS is a multicast/broadcast radio bearer (MRB).

A receiving apparatus, applied to a user equipment (UE), comprising:
a receiving module configured to receive a Radio Resource Control Release (RRCRelease) message;
a suspension module configured to determine whether the RRCRelease message comprises SuspendConfig information, and in response to determining that the RRCRelease message comprises SuspendConfig information, perform one of the following according to the RRCRelease message: suspend all radio bearers associated with the MBS; not suspend all radio bearers associated with the MBS; suspend some of all the radio bearers associated with the MBS and not suspend the remaining radio bearers among all the radio bearers;
wherein, each radio bearer associated with the MBS is a multicast/broadcast radio bearer (MRB).

A base station, comprising a processor and a memory, wherein the memory is configured to store a computer program, and when the computer program is executed by the processor, the processor implements the MBS processing method provided by any embodiment of the present application.

A terminal, comprising a processor and a memory, wherein the memory is configured to store a computer program, and when the computer program is executed by the processor, the processor implements the MBS processing method provided by any embodiment of the present application.

A computer-readable storage medium, comprising a computer program, wherein when the computer program is executed by a processor, the processor implements the MBS processing method provided by any embodiment of the present application.

### Brief Description of the Drawings

Figure 1 is a flowchart illustrating the MBS processing method according to one embodiment of the present application.
Figure 2 is a flowchart illustrating the MBS processing method according to another embodiment of the present application.
Figure 3 is a flowchart illustrating the MBS processing method according to yet another embodiment of the present application.
Figure 4 is a flowchart illustrating the MBS processing method according to still another embodiment of the present application.
Figure 5 is a schematic diagram illustrating the structure of the transmitting apparatus according to one embodiment of the present application.
Figure 6 is a schematic diagram illustrating the structure of the receiving apparatus according to one embodiment of the present application.
Figure 7 is a schematic diagram illustrating the structure of the transmitting apparatus according to another embodiment of the present application.
Figure 8 is a schematic diagram illustrating the structure of the receiving apparatus according to another embodiment of the present application.
Figure 9 is a schematic diagram illustrating the structure of the base station according to one embodiment of the present application.
Figure 10 is a schematic diagram illustrating the structure of the terminal according to one embodiment of the present application.

### Detailed Description of Embodiments

The related technology does not involve specific operational regulations for MBS, such as whether it is necessary to suspend the MBS Radio Bearer, the timing for suspending the MBS Radio Bearer, and how to suspend the MBS Radio Bearer.

The following description, in conjunction with the drawings and specific embodiments, provides explanations for the present application but does not limit the present application

The present application provides a processing method for MBS, a receiving apparatus, and a sending apparatus to address the issues in the related technology. By introducing suspension information, the receiving apparatus (i.e., UE) for MBS may be instructed to suspend or not suspend the corresponding radio bearers based on the suspension information, thereby enhances the continuity and scheduling flexibility of MBS, optimizes network resources, reduces the power consumption of the UE, and ultimately improves system performance and user experience. The suspension information may be newly generated by the sending apparatus (such as base station) or defined upon by protocol.

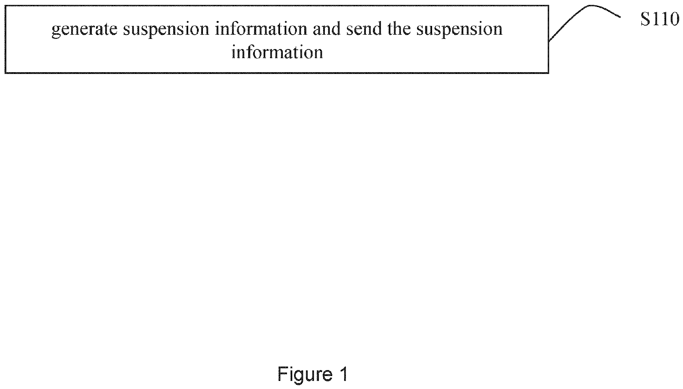

An MBS processing method is first provided, as shown in Figure 1. The method comprises:
S110: generating suspension information and sending the suspension information, the suspension information is configured to instruct to suspend all radio bearers associated with a multicast/broadcast service (MBS), or is configured to instruct not to suspend all the radio bears associated with the MBS, or is configured to instruct to suspend some of all the radio bearers associated with the MBS and not to suspend the remaining radio bearers among all the radio bearers.

Each radio bearer associated with the MBS is a multicast/broadcast radio bearer (MBS Radio Bearer , MRB).

Exemplarily, the method shown in Figure 1 is executed by a base station. Exemplarily, the base station sends suspension information to the UE to instruct the UE to perform at least one of the following: suspend all radio bearers associated with the MBS; do not sus pend all radio bearers associated with the MBS; suspend some radio bearers associated with the MBS and do not suspend the remaining radio bearers.

Exemplarily, the base station sends the suspension information to the UE receiving the MBS.

The present application provides an MBS processing method. By generating a suspension information, the receiving apparatus (i.e., UE) that receives the MBS may suspend the radio bearer associated with the MBS upon receiving the suspension information, thereby enhancing the continuity and scheduling flexibility of the MBS, optimizing network resources, reducing the power consumption of the UE, and thus improving system performance and user experience. Each radio bearer associated with the MBS is an MRB.

In one embodiment of the present application, all MRBs of the receiving apparatus that receives the MBS may be all MRBs currently established by the receiving apparatus.

In another embodiment of the present application, all MRBs of the receiving apparatus that receives the MBS may also be all MRBs currently activated by the receiving apparatus.

In one embodiment of the present application, the total number of bits of the suspension information is 1 bit, and the 1 bit is assigned a value of 0 or 1.

The first assignment method is that when the 1 bit is assigned a value of 0, the suspension information indicates that all MRBs of the receiving apparatus that receives the MBS are suspended, and when the 1 bit is assigned a value of 1, the suspension information indicates that all MRBs of the receiving apparatus that receives the MBS are not suspended; or the second assignment method is that when the 1 bit is assigned a value of 0, the suspension information indicates that all MRBs of the receiving apparatus that receives the MBS are not suspended, and when the 1 bit is assigned a value of 1, the suspension information indicates that all MRBs of the receiving apparatus that receives the MBS are suspended.

A first method of generating suspension information is provided. The total number of bits of the suspension information generated by this method is 1 bit, and the 1 bit is assigned a value of 0 or 1. When the value of the 1 bit is 0 or 1, the suspension information will instruct the receiving apparatus (such as, UE) to suspend or not suspend all MRBs. All the MRBs of the receiving apparatus that receives the MBS may be all MRBs currently established by the receiving apparatus, or may be all MRBs currently activated by the receiving apparatus. Therefore, in the first assignment method, the 1 bit of the suspension information is assigned a value of 0 to indicate that all MRBs currently established or activated by the receiving apparatus that receives the MBS are suspended, and the 1 bit of the suspension information is assigned a value of 1 to indicate that all MRBs currently established or activated by the receiving apparatus that receives the MBS are not suspended; in the second assignment method, the 1 bit of the suspension information is assigned a value of 0 to indicate that all MRBs currently established or activated by the receiving apparatus that receives the MBS are not suspended, and the 1 bit of the suspension information is assigned a value of 1 to indicate that all MRBs currently established or activated by the receiving apparatus that receives the MBS are suspended.

For example, the receiving apparatus that receives the MBS currently establishes 10 MRBs and activates 5 MRBs, with 5 MRBs currently inactive, if the current operation requires suspending all established MRBs and the suspension information is configured to instruct the suspension or non-suspension of all MRBs currently established by the receiving apparatus that receives the MBS, then the suspension information generated using the first assignment method is assigned a value of "0," and the suspension information generated using the second assignment method is assigned a value of "1," indicating the suspension of all MRBs, thus suspending all MRBs currently established by the receiving apparatus that receives the MBS to achieve the current suspension requirement. If the suspension information is configured to instruct the suspension or non-suspension of all MRBs currently activated by the receiving apparatus that receives the MBS, then the suspension information generated using the first assignment method is assigned a value of "0," and the suspension information generated using the second assignment method is assigned a value of "1," indicating the suspension of all MRBs currently activated by the receiving apparatus that receives the MBS, to achieve the current suspension requirement.

In another embodiment of the present application, the total number of bits of the suspension information is the number of all MRBs of the receiving apparatus that receives the MBS, and each bit is assigned a value of 0 or 1; the bits in the suspension information correspond, in the order from the most significant bit to the least significant bit or from the least significant bit to the most significant bit, one-to-one with all MRBs in ascending or descending order of the MRB identifiers (MRB IDs); for each bit in the suspension information: the first assignment method is that when the bit is assigned a value of 0, the suspension information indicates that the MRB corresponding to the bit is suspended, and when the bit is assigned a value of 1, the suspension information indicates that the MRB corresponding to the bit is not suspended; or the second assignment method is that when the bit is assigned a value of 0, the suspension information indicates that the MRB corresponding to the bit is not suspended, and when the bit is assigned a value of 1, the suspension information indicates that the MRB corresponding to the bit is suspended.

A second method of generating suspension information is provided. The total number of bits of the suspension information generated by this method is the number of all MRBs of the receiving apparatus that receives the MBS, and the bits correspond, in the order from the most significant bit to the least significant bit or from the least significant bit to the most significant bit, one-to-one with all MRBs in ascending or descending order of the MRB IDs, that is each bit corresponds to one MRB in order, and each bit assigned a value of 0 or 1 to indicate the suspension or non-suspension of the MRB corresponding to the bit.

In the first assignment method, for each bit in the suspension information, when the bit is assigned a value of 0, the suspension information indicates that the MRB corresponding to the bit is suspended, and when the bit is assigned a value of 1, the suspension information indicates that the MRB corresponding to the bit is not suspended; in the second assignment method, for each bit in the suspension information, when the bit is assigned a value of 0, the suspension information indicates that the MRB corresponding to the bit is not suspended, and when the bit is assigned a value of 1, the suspension information indicates that the MRB corresponding to the bit is suspended.

All MRBs of the receiving apparatus that receives the MBS may be all MRBs currently established by the receiving apparatus or all MRBs currently activated by the receiving apparatus. In other words, if the total number of bits of the suspension information is the number of all MRBs currently established by the receiving apparatus that receives the MBS, and the bits correspond, in the order from the most significant bit to the least significant bit or from the least significant bit to the most significant bit, one-to-one with all MRBs currently established by the receiving apparatus in ascending or descending order of the MRB IDs, when each bit in the suspension information is assigned a value of 0 or 1, the suspension information will indicate the suspension or non-suspension of the MRB corresponding to the bit among all MRBs currently established by the receiving apparatus that receives the MBS; if the total number of bits of the suspension information is the number of all MRBs currently activated by the receiving apparatus that receives the MBS, and the bits correspond, in the order from the most significant bit to the least significant bit or from the least significant bit to the most significant bit, one-to-one with all MRBs currently activated by the receiving apparatus in ascending or descending order of the MRB IDs, when each bit in the suspension information is assigned a value of 0 or 1, the suspension information will indicate the suspension or non-suspension of the MRB corresponding to the bit among all MRBs currently activated by the receiving apparatus that receives the MBS.

For example, the receiving apparatus that receives the MBS currently establishes 10 MRBs, with MRB IDs in ascending order as MRB1, MRB2, MRB3, ..., MRB10, and currently activates 5 MRBs with MRB IDs in ascending order as MRB1, MRB2, MRB3, MRB4, and MRB5, and currently inactivates 5 MRBs with MRB IDs in ascending order as MRB6, MRB7, MRB8, MRB9, and MRB10, if the current operation requires suspending MRB1 and MRB2, when the suspension information is generated using the first assignment method and the total number of bits of the suspension information is the number of all MRBs currently established by the receiving apparatus that receives the MBS, then the suspension information generated is "0011111111" (bits corresponding to MRB IDs in ascending order from high to low) or "1111111100" (bits corresponding to MRB IDs in descending order from high to low); when the suspension information is generated using the second assignment method and the total number of bits of the suspension information is the number of all MRBs currently established by the receiving apparatus that receives the MBS, then the suspension information generated is "1100000000" (bits corresponding to MRB IDs in ascending order from high to low) or "0000000011" (bits corresponding to MRB IDs in descending order from high to low); if the total number of bits of the suspension information is the number of all MRBs currently activated by the receiving apparatus that receives the MBS and the suspension information is generated using the first assignment method, then the suspension information generated is "00111" (bits corresponding to MRB IDs in ascending order from high to low) or "11100" (bits corresponding to MRB IDs in descending order from high to low); if the total number of bits of the suspension information is the number of all MRBs currently activated by the receiving apparatus that receives the MBS and the suspension information is generated using the second assignment method, then the suspension information generated is "11000" (bits corresponding to MRB IDs in ascending order from high to low) or "00011" (bits corresponding to MRB IDs in descending order from high to low).

In another embodiment of the present application, the suspension information includes one or more MRB IDs, and the suspension information is configured to instruct the suspension of the MRB corresponding to each MRB ID of the one or more MRB IDs.

A third method of generating suspension information is provided. The suspension information generated by this method includes one or more MRB IDs to suspend the MRBs corresponding to each MRB ID included in the suspension information. In other words, the total number of bits of the suspension information is not fixed, but depends on the actual needs, and the MRBs corresponding to the MRB IDs included in the suspension information are the MRBs required to be suspended by the suspension information. For example, if the receiving apparatus that receives the MBS currently establishes 16 MRBs with MRB IDs in ascending order as MRB1, MRB2, ..., MRB16, each MRB ID occupies 4 bits and is represented in hexadecimal, and the current requirement is to suspend MRB1 and MRB3, then "0001" and "0011" are included in the suspension information, which can be represented as "00010011" to indicate the suspension of MRB1 and MRB3. The suspension information may also include the number of MRB IDs included to avoid confusion with other information. For example, if the requirement is to suspend 2 MRBs, "0010" may be added before "0001" and "0011" to indicate that the suspension information is configured to instruct the suspension of MRBs corresponding to 2 MRB IDs, and the suspension information may be represented as "001000010011"; a bit may also be added before or after each MRB ID to indicate whether there are other MRB IDs before or after. For example, the assignment a value of the bit of "1" indicates that there are other MRB IDs after this MRB ID, and "0" indicates that there are no other MRB IDs after this MRB ID, which may be represented as "0001100110".

In one embodiment of the present application, the suspension information may be included in the RRCRelease message.

For example, the base station includes the generated suspension information in the RRCRelease message and sends the RRCRelease message to the receiving apparatus that receives the MBS, so that the receiving apparatus that receives the MBS obtains the suspension information and suspends the corresponding MRB.

Optionally, any one of the three methods mentioned above may be used to generate the suspension information and include the suspension information in the RRCRelease message for sending.

For example, the first assignment method in the first generation method is used to generate the suspension information, and the suspension information is configured to instruct the suspension of all MRBs currently activated by the receiving apparatus that receives the MBS. If the UE receiving the MBS currently activates 5 MRBs in the current communication system and the current operation requires suspending all activated MRBs of the receiving apparatus that receives the MBS, the generated suspension information is "0". The format of the RRCRelease message sent to achieve the current suspension requirement is as follows:

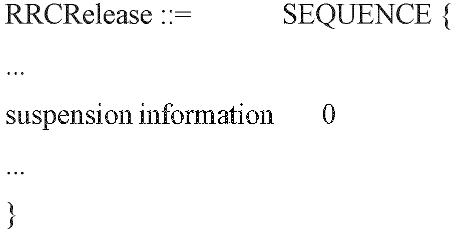

In addition to the part indicating the suspension information, the RRCRelease message may also have messages for other functions, represented by ellipses "...". The function of the "..." part in the message format below is the same.

For example, the first assignment method in the second generation method is used to generate the suspension information and the suspension information is configured to instruct the suspension of all MRBs currently activated by the receiving apparatus that receives the MBS, and the bits in the suspension information correspond to the MRB IDs in ascending order from high to low, if the receiving apparatus that receives the MBS currently activates 5 MRBs in current communication system and the current operation requires suspending MRB1 and MRB2 among the 5 MRBs, the generated suspension information is "00111". The format of the RRCRelease message sent to achieve the current suspension requirement is as follows:

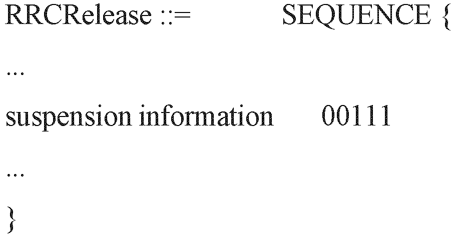

For example, the third generation method is used to generate the suspension information and the suspension information is configured to instruct the suspension of MRBs corresponding to MRB IDs, if the receiving apparatus that receives the MBS currently establishes 10 MRBs in the current communication system and the current operation requires suspending MRB1 and MRB3, the generated suspension information is "00010011". The format of the RRCRelease message sent to achieve the current suspension requirement is as follows:

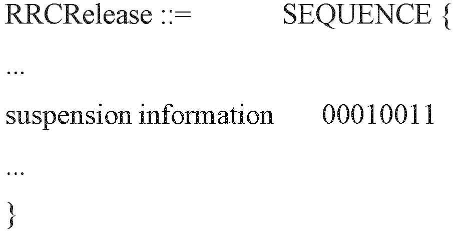

In one embodiment of the present application, the suspension information may also be included in the SuspendConfig information. For example, the generated suspension information is included in the SuspendConfig information, and by sending the SuspendConfig information included in the RRCRelease message, the receiving apparatus that receives the MBS obtains the suspension information and suspends the corresponding MRB.

Any one of the three methods mentioned above may be used to generate the suspension information and include the suspension information in the RRCRelease message.

For example, the first assignment method in the first generation method is used to generate the suspension information, and the suspension information is configured to instruct the suspension of all MRBs currently activated by the receiving apparatus that receives the MBS. If the UE receiving the MBS currently activates 5 MRBs in the current communication system and the current operation requires suspending all activated MRBs, the generated suspension information is "0". The format of the RRCRelease message sent to achieve the current suspension requirement is as follows:

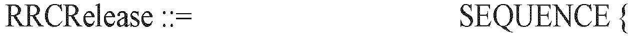

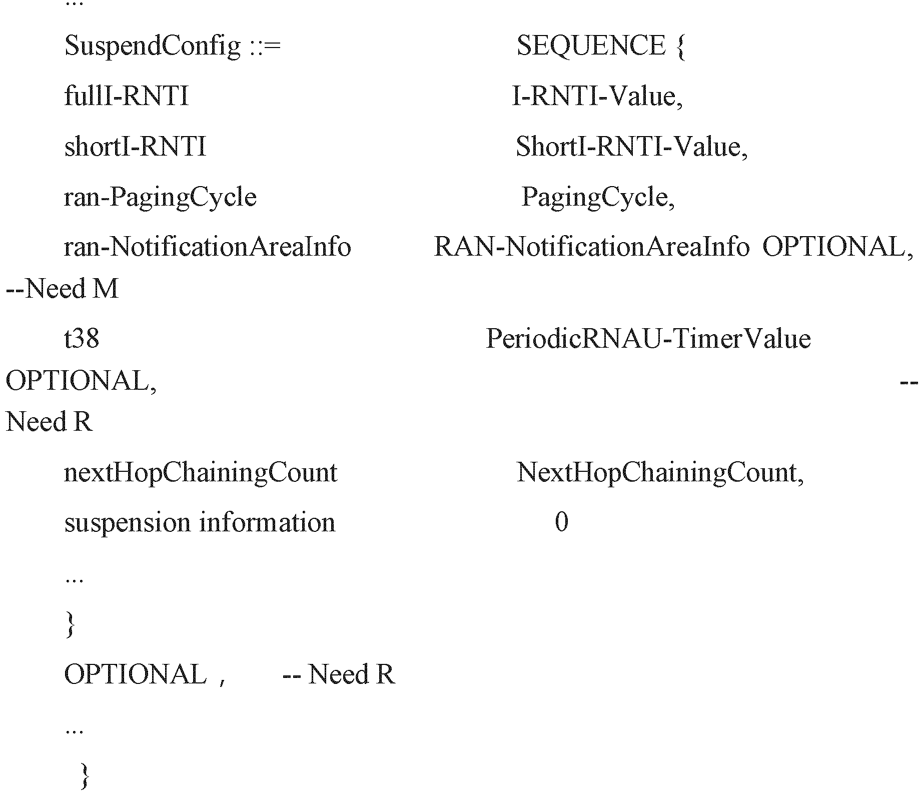

The present application does not limit other parameters in the SuspendConfig. It only adds the suspension information based on the parameter structure of SuspendConfig in the related technology.

For example, the first assignment method in the second generation method is used to generate the suspension information, and the suspension information is configured to instruct the suspension of all MRBs currently activated by the receiving apparatus that receives the MBS, and the bits in the suspension information correspond to the MRB IDs in ascending order from high to low. If the receiving apparatus that receives the MBS currently activates 5 MRBs in current communication system and the current operation requires suspending MRB1 and MRB2 among the 5 MRBs, the generated suspension information is "00111". The format of the RRCRelease message sent to achieve the current suspension requirement is as follows:

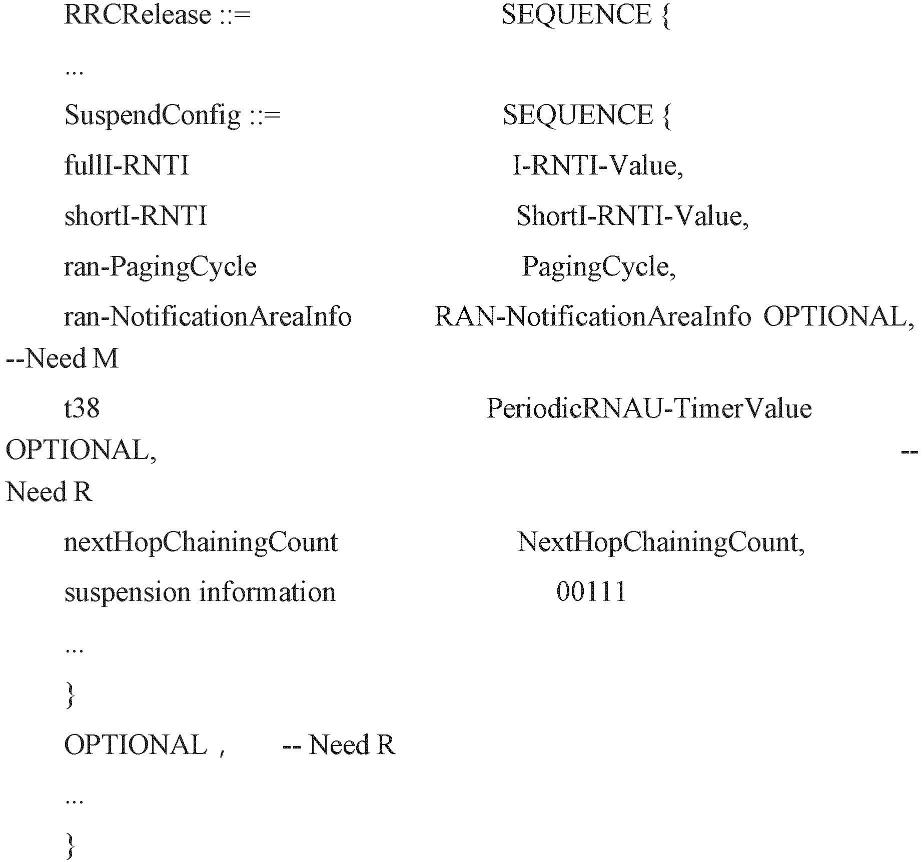

For example, the third generation method is used to generate the suspension information, and the suspension information is configured to instruct the suspension of MRBs corresponding to MRB IDs. If the receiving apparatus that receives the MBS currently establishes 10 MRBs in the current communication system and the current operation requires suspending MRB1 and MRB3, the generated suspension information is "00010011". The format of the RRCRelease message sent to achieve the current suspension requirement is as follows:

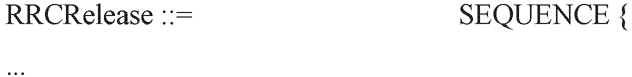

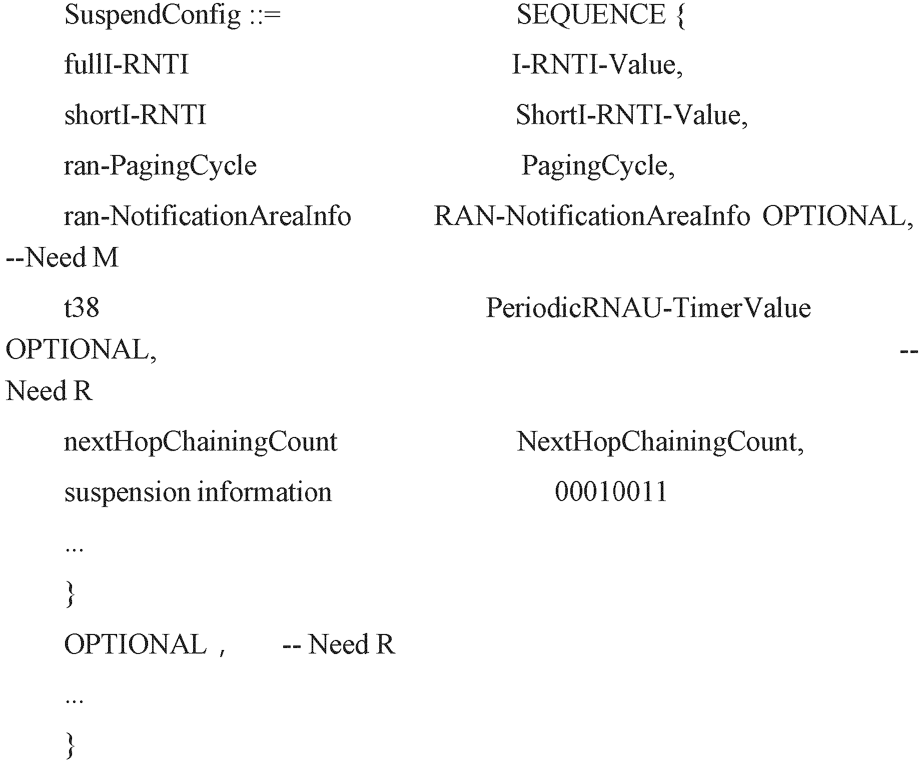

In one embodiment of the present application, the suspension information may also be carried by control signaling. The control signaling may be Non Access Stratum (NAS) signaling, RRC layer signaling, Packet Data Convergence Protocol (PDCP) layer signaling, Radio Link Control (RLC) layer signaling, Media Access Control (MAC) layer signaling, or Physical Layer (PHY) layer signaling.

The base station generates control signaling to carry the suspension information, and the control signaling may be NAS signaling, RRC layer signaling, PDCP layer signaling, RLC layer signaling, MAC layer signaling, or PHY signaling. For example, if the control signaling is MAC layer signaling, the suspension information may be included in the MAC control element (CE). The control command has no necessary relationship with the transiting between RRC_CONNECTED and RRC_INACTIVE. In other words, after the receiving apparatus that receives the MBS receives the control command, it will suspend the MRB indicated by the suspension message in the control command accordingly, but the receiving apparatus may enter the RRC_INACTIVE state at this time, that is, the control command or RRCRelease message at this time instructs the receiving apparatus that receives the MBS to enter the RRC_INACTIVE state, or may instruct the receiving apparatus that receives the MBS to remain in the RRC_CONNECTED state.

For example, the first assignment method in the first generation method is used to generate the suspension information, and the suspension information is configured to instruct the suspension of all MRBs currently activated by the receiving apparatus that receives the MBS. If the UE receiving the MBS currently activates 5 MRBs in the current communication system and the current operation requires suspending all activated MRBs, the generated suspension information is "0". The format of the control signaling sent to achieve the current suspension requirement is as follows:

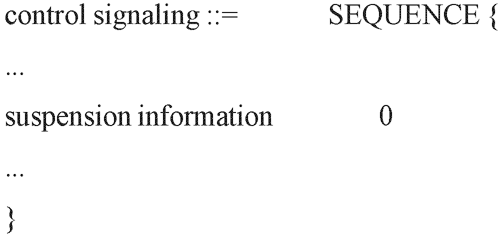

For example, the first assignment method in the second generation method is used to generate the suspension information, and the suspension information is configured to instruct the suspension of all MRBs currently activated by the receiving apparatus that receives the MBS, and the bits in the suspension information correspond to the MRB IDs in ascending order from high to low. If the receiving apparatus that receives the MBS currently activates 5 MRBs, and the current operation requires suspending MRB1 and MRB2 among the 5 MRBs, the generated suspension information is "00111". The format of the control signaling sent to achieve the current suspension requirement is as follows:

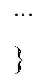

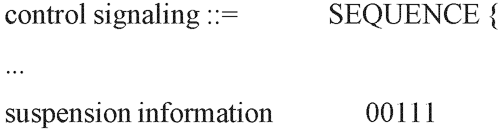

For example, the third generation method is used to generate the suspension information, and the suspension information is configured to instruct the suspension of MRBs corresponding to MRB IDs. If the receiving apparatus that receives the MBS currently establishes 10 MRBs and the current operation requires suspending MRB1 and MRB3, the generated suspension information is "00010011". The format of the control signaling sent to achieve the current suspension requirement is as follows:

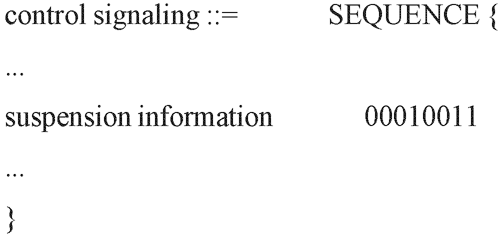

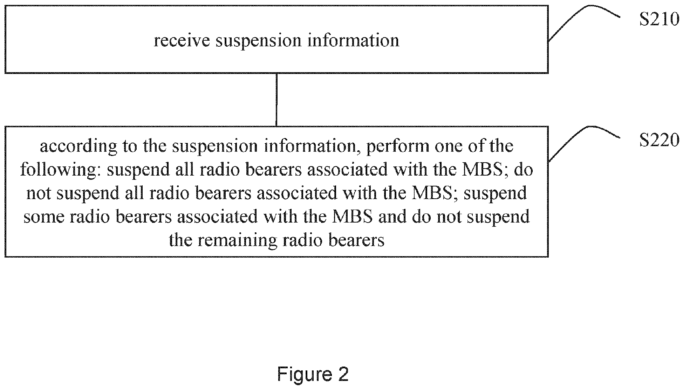

An MBS processing method is further provided. As shown in FIGURE 2, the method includes:
S210: Receive suspension information.
S220: According to the suspension information, perform one of the following: suspend all radio bearers associated with the MBS; do not suspend all radio bearers associated with the MBS; suspend some radio bearers associated with the MBS and do not suspend the remaining radio bearers.

Each radio bearer associated with the MBS is an MRB.

Exemplarily, the method shown in FIGURE 2 may be executed by the UE. Exemplarily, the UE receives the suspension information sent by the base station.

Exemplarily, after receiving the suspension information, the UE will suspend all radio bearers associated with the MBS, or not suspend all radio bearers associated with the MBS, or suspend some radio bearers and not suspend other radio bearers according to the suspension information. Each radio bearer associated with the MBS is an MRB.

In one embodiment of the present application, receiving the suspension information includes receiving the suspension information included in the RRCRelease message.

Exemplarily, after receiving the RRCRelease message, the UE performs the relevant operations of suspending or not suspending the corresponding MRB according to the value assigned in the suspension information in the RRCRelease message.

In one embodiment of the present application, receiving the suspension information includes receiving the suspension information included in the SuspendConfig information.

Exemplarily, after receiving the RRCRelease message, the UE judges whether the RRCRelease message includes SuspendConfig information. If the RRCRelease message includes SuspendConfig information, the UE enters the RRC_inactive state, applies the configuration corresponding to the SuspendConfig, suspends all SRBs except SRB0 for control and all DRBs, and performs the relevant operations of suspending or not suspending the corresponding MRB according to the value assigned in the suspension message.

In one embodiment of the present application, receiving the suspension information includes receiving the suspension information carried by control signaling. The control signaling may be NAS signaling, RRC layer signaling, PDCP layer signaling, RLC layer signaling, MAC layer signaling, or PHY layer signaling.

Exemplarily, after receiving the newly introduced control command, the UE decodes the newly introduced signaling to obtain the suspension information included in the newly introduced control command, and then performs the relevant operations of suspending or not suspending the corresponding MRB according to the value assigned in the suspension message. The control command may also include other parts of the message, and other steps may be performed after receiving the control command.

In one embodiment of the present application, all MRBs of the receiving apparatus that receives the MBS are all MRBs currently established by the receiving apparatus.

In one embodiment of the present application, all MRBs of the receiving apparatus that receives the MBS are all MRBs currently activated by the receiving apparatus.

In one embodiment of the present application, according to the suspension information, one of the following is performed: suspend all radio bearers; do not suspend all radio bearers; suspend some radio bearers of all the radio bearers and do not suspend other radio bearers of all the radio bearers. This includes:
The total number of bits of the suspension information is 1 bit, and the 1 bit is assigned a value of 0 or 1;
When the 1 bit is assigned a value of 0, all MRBs of the receiving apparatus (i.e., the UE) that receives the MBS are suspended,
When the 1 bit is assigned a value of 1, all MRBs of the receiving apparatus that receives the MBS are not suspended;
   or
When the 1 bit is assigned a value of 0, all MRBs of the receiving apparatus that receives the MBS are not suspended,
When the 1 bit is assigned a value of 1, all MRBs of the receiving apparatus that receives the MBS are suspended.

Exemplarily, if all MRBs to suspend or no to suspend as indicated by the received MRB message are all MRBs currently established by the receiving apparatus (UE), when the 1 bit of the suspension message is assigned a value of 0, all MRBs currently established by the receiving apparatus that receives the MBS are suspended, and when the 1 bit of the suspension message is assigned a value of 1, all MRBs currently established by the receiving apparatus that receives the MBS are not suspended; or when the 1 bit of the suspension message is assigned a value of 0, all MRBs currently established by the receiving apparatus that receives the MBS are not suspend, and when the 1 bit of the suspension message is assigned a value of 1, all MRBs currently established by the receiving apparatus that receives the MBS are suspended.

If all MRBs to suspend or no to suspend as indicated by the received MRB message are all MRBs currently activated by the receiving apparatus that receives the MBS, when the 1 bit of the suspension message is assigned a value of 0, all MRBs currently activated by the receiving apparatus that receives the MBS are suspended, and when the 1 bit of the suspension message is assigned a value of 1, all MRBs currently activated by the receiving apparatus that receives the MBS are not suspended; or when the 1 bit of the suspension message is assigned a value of 0, all MRBs currently activated by the receiving apparatus that receives the MBS are not suspended, and when the 1 bit of the suspension message is assigned a value of 1, all MRBs currently activated by the receiving apparatus that receives the MBS are suspended.

In one embodiment of the present application, according to the suspension information, one of the following is performed: suspend all radio bearers; do not suspend all radio bearers; suspend some radio bearers of all radio bearers and do not suspend other radio bearers of all radio bearers, which includes:
The total number of bits of the suspension information is the number of all MRBs of the receiving apparatus that receives the MBS, and each bit is assigned a value of 0 or 1;
The bits in the suspension information correspond, from high to low or from low to high, one-to-one with all MRBs in ascending or descending order of the MRB IDs;
For each bit in the suspension information:
   When the bit is assigned a value of 0, the MRB corresponding to the bit is suspended,
   When the bit is assigned a value of 1, the MRB corresponding to the bit is not suspended;
      or
   When the bit is assigned a value of 0, the MRB corresponding to the bit is not suspended,
   When the bit is assigned a value of 1, the MRB corresponding to the bit is suspended.

Exemplarily, if all MRBs to suspend or no to suspend as indicated by the received MRB message are all MRBs currently established by the receiving apparatus, when a bit in the suspension message is assigned a value of 0, the MRB corresponding to the bit in the MRB IDs of all MRBs currently established by the receiving apparatus is suspended, and when a bit in the suspension message is assigned a value of 1, the MRB corresponding to the bit in the MRB IDs of all MRBs currently established by the receiving apparatus is not suspended; or when a bit in the suspension message is assigned a value of 0, the MRB corresponding to the bit in the MRB IDs of all MRBs currently established by the receiving apparatus is not suspended, and when a bit in the suspension message is assigned a value of 1, the MRB corresponding to the bit in the MRB IDs of all MRBs currently established by the receiving apparatus is suspended.

If all MRBs to suspend or no to suspend as indicated by the received MRB message are all MRBs currently activated by the receiving apparatus, when a bit in the suspension message is assigned a value of 0, the MRB corresponding to the bit in the MRB IDs of all MRBs currently activated by the receiving apparatus is suspended, and when a bit in the suspension message is assigned a value of 1, the MRB corresponding to the bit in the MRB IDs of all MRBs currently activated by the receiving apparatus is not suspended; or when a bit in the suspension message is assigned a value of 0, the MRB corresponding to the bit in the MRB IDs of all MRBs currently activated by the receiving apparatus is not suspended, and when a bit in the suspension message is assigned a value of 1, the MRB corresponding to the bit in the MRB IDs of all MRBs currently activated by the receiving apparatus is suspended.

In one embodiment of the present application, according to the suspension information, one of the following is performed: suspend all radio bearers; do not suspend all radio bearers; suspend some radio bearers and do not suspend other radio bearers, which includes: when the suspension information includes one or more MRB IDs, the MRBs corresponding to each MRB ID of the one or more MRB IDs are suspended.

In one embodiment of the present application, it also includes: indicating the suspension and/or non-suspension of the radio bearers associated with the MBS to the PDCP layer and/or lower layers of the PDCP layer of the receiving apparatus that receives the MBS.

Exemplarily, the UE is in the RRC_INACTIVE state.

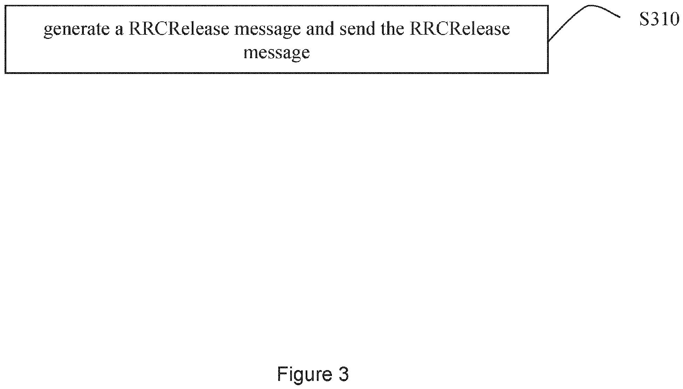

Another MBS processing method is provided. As shown in FIGURE 3, the method includes:
S310: generating a RRCRelease message and sending the RRCRelease message, the RRCRelease message includes SuspendConfig information, and the RRCRelease message is configured to instruct the suspension of all radio bearers associated with the MBS, or to indicate the non-suspension of all radio bearers associated with the MBS, or to indicate the suspension of some radio bearers associated with the MBS and the non-suspension of the remaining radio bearers; each radio bearer associated with the MBS is an MRB.

Exemplarily, the method shown in Figure 3 is executed by a base station. Exemplarily, the base station sends a RRCRelease message to the UE to instruct the UE to perform one of the following: suspend all radio bearers associated with the MBS; do not suspend all radio bearers associated with the MBS; suspend some radio bearers associated with the MBS and do not suspend the remaining radio bearers.

By sending the RRCRelease message, the receiving apparatus (i.e., UE) that receives the MBS is instructed to suspend or not suspend the radio bearers associated with the MBS upon receiving the RRCRelease message.

In one embodiment of the present application, when the RRCRelease message includes SuspendConfig information, it indicates the suspension of one or more MRBs of all MRBs and/or the non-suspension of one or more MRBs of all MRBs.

Exemplarily, the receiving apparatus that receives the MBS determines whether the RRCRelease message includes SuspendConfig information after receiving the RRCRelease message. If the RRCRelease message includes SuspendConfig information, it indicates the receiving apparatus suspends all radio bearers associated with the MBS, or it indicates the receiving apparatus does not suspend all radio bearers associated with the MBS, or it indicates the receiving apparatus suspends some radio bearers and does not suspend other radio bearers.

In one embodiment of the present application, the MRB includes broadcast service radio bearers (broadcast MRBs) and/or multicast service radio bearers (multicast MRBs).

Exemplarily, the MRB may be only broadcast service radio bearers, be only multicast service radio bearers, or be MRBs that include both broadcast service radio bearers and multicast service radio bearers. After the receiving apparatus receives the RRCRelease message that includes SuspendConfig information, it may suspend only broadcast service radio bearers, suspend only multicast service radio bearers, or suspend MRBs that include both broadcast service radio bearers and multicast service radio bearers.

In one embodiment of the present application, the MRB includes a first type of MRB for transmitting MBS data and/or a second type of MRB for transmitting MBS control information.

Exemplarily, the MRB may be only the first type of MRB for transmitting MBS data, be only the second type of MRB for transmitting MBS control information, or be all MRBs that include both the first type of MRB for transmitting MBS data and the second type of MRB for transmitting MBS control information. After the receiving apparatus receives the RRCRelease message that includes SuspendConfig information, it may suspend only the first type of MRB for transmitting MBS data, suspend only the second type of MRB for transmitting MBS control information, or suspend all MRBs that include both the first type of MRB for transmitting MBS data and the second type of MRB for transmitting MBS control information.

In one embodiment of the present application, the MRB includes MRBs currently established by the receiving apparatus that receives the MBS or MRBs currently activated by the receiving apparatus that receives the MBS.

Exemplarily, the MRB of the receiving apparatus that receives the MBS may be only MRBs currently established by the receiving apparatus, be only MRBs currently activated by the receiving apparatus, or be all MRBs that include both broadcast service radio bearers and multicast service radio bearers. After the receiving apparatus receives the RRCRelease message that includes SuspendConfig information, it may suspend only MRBs currently established by the receiving apparatus, suspend only MRBs currently activated by the receiving apparatus, or suspend all MRBs that include both MRBs currently established by the receiving apparatus and MRBs currently activated by the receiving apparatus.

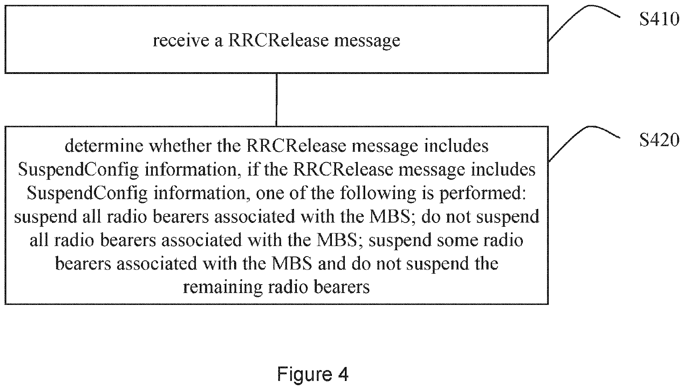

Another MBS processing method is provided. As shown in Figure 4, the method includes:
S410: receiving a RRCRelease message.
S420: determining whether the RRCRelease message includes SuspendConfig information. If the RRCRelease message includes SuspendConfig information, one of the following is performed: suspend all radio bearers associated with the MBS; do not suspend all radio bearers associated with the MBS; suspend some radio bearers associated with the MBS and do not suspend the remaining radio bearers.

Each radio bearer associated with the MBS is an MRB.

Exemplarily, the method shown in Figure 4 may be executed by the UE. Exemplarily, the UE receives the RRCRelease message sent by the base station, and the UE performs one of the following according to the RRCRelease message sent by the base station: suspend all radio bearers associated with the MBS; do not suspend all radio bearers associated with the MBS; suspend some radio bearers associated with the MBS and do not suspend the remaining radio bearers.

In one embodiment of the present application, when the RRCRelease message includes SuspendConfig information, one or more MRBs of all MRBs are suspended and/or one or more MRBs of all MRBs are not suspended.

Exemplarily, after the receiving apparatus that receives the MBS receives the RRCRelease message, it determines whether the RRCRelease message includes SuspendConfig information. If the RRCRelease message includes SuspendConfig information, the receiving apparatus suspends all radio bearers associated with the MBS, or does not suspend all radio bearers associated with the MBS, or suspends some radio bearers and does not suspend other radio bearers associated with the MBS.

In one embodiment of the present application, the MRB includes broadcast service radio bearers (broadcast MRBs) and/or multicast service radio bearers (multicast MRBs).

Exemplarily, the MRB of the receiving apparatus that receives the MBS may be only broadcast service radio bearers, be only multicast service radio bearers, or be MRBs that include both broadcast service radio bearers and multicast service radio bearers. After receiving the RRCRelease message that includes SuspendConfig information, it may suspend only broadcast service radio bearers, suspend only multicast service radio bearers, or suspend MRBs that include both broadcast service radio bearers and multicast service radio bearers.

In one embodiment of the present application, the MRB includes a first type of MRB for transmitting MBS data and/or a second type of MRB for transmitting MBS control information.

Exemplarily, the MRB of the receiving apparatus that receives the MBS may be only the first type of MRB for transmitting MBS data, be only the second type of MRB for transmitting MBS control information, or be all MRBs that include both the first type of MRB for transmitting MBS data and the second type of MRB for transmitting MBS control information. After receiving the RRCRelease message that includes SuspendConfig information, it may suspend only the first type of MRB for transmitting MBS data, suspend only the second type of MRB for transmitting MBS control information, or suspend all MRBs that include both the first type of MRB for transmitting MBS data and the second type of MRB for transmitting MBS control information.

In one embodiment of the present application, the MRB includes MRBs currently established by the receiving apparatus that receives the MBS or MRBs currently activated by the receiving apparatus that receives the MBS.

Exemplarily, the MRB of the receiving apparatus that receives the MBS may be only MRBs currently established by the receiving apparatus, be only MRBs currently activated by the receiving apparatus, or be all MRBs that include both broadcast service radio bearers and multicast service radio bearers. After receiving the RRCRelease message that includes SuspendConfig information, it may suspend only MRBs currently established by the receiving apparatus, suspend only MRBs currently activated by the receiving apparatus, or suspend all MRBs that include both MRBs currently established by the receiving apparatus and MRBs currently activated by the receiving apparatus.

In one embodiment of the present application, it also includes: indicating the suspension and/or non-suspension of the radio bearers associated with the MBS to the PDCP layer and/or lower layers of the PDCP layer of the receiving apparatus that receives the MBS.

Exemplarily, the UE is in the RRC_INACTIVE state.

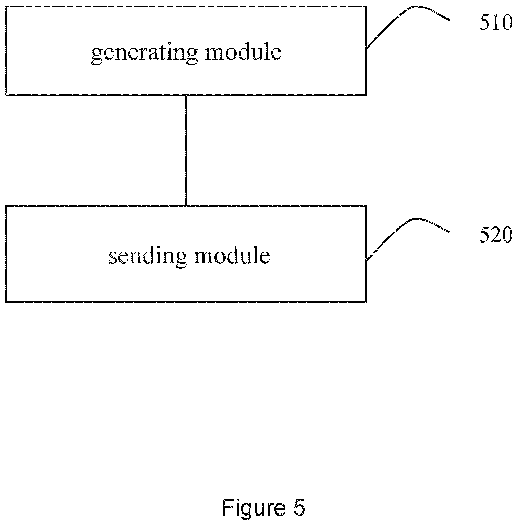

A transmitting apparatus is further provided. As shown in Figure 5, the transmitting apparatus includes: a generating module 510 configured to generate suspension information; and a sending module 520 configured to send the suspension information. The suspension information is configured to instruct the suspension of all radio bearers associated with the MBS, or to indicate the non-suspension of all radio bearers associated with the MBS, or to indicate the suspension of some radio bearers associated with the MBS and the non-suspension of the remaining radio bearers. Each radio bearer associated with the MBS is an MRB.

Exemplarily, the transmitting apparatus is a base station. Exemplarily, the sending module 520 is configured to send suspension information to the UE to instruct the UE to perform one of the following: suspend all radio bearers associated with the MBS; do not suspend all radio bearers associated with the MBS; suspend some radio bearers associated with the MBS and do not suspend the remaining radio bearers.

In one embodiment of the present application, all MRBs of the receiving apparatus that receives the MBS include all MRBs currently established by the receiving apparatus that receives the MBS or all MRBs currently activated by the receiving apparatus that receives the MBS.

The generating module includes: a first generating unit, a second generating unit, or a third generating unit;
The first generating unit is configured to generate suspension information, and the total number of bits of the suspension information is 1 bit, and the 1 bit is assigned a value of 0 or 1;
When the 1 bit is assigned a value of 0, the suspension information indicates the suspension of all MRBs of the receiving apparatus that receives the MBS,
When the 1 bit is assigned a value of 1, the suspension information indicates the non-suspension of all MRBs of the receiving apparatus that receives the MBS;
   or
When the 1 bit is assigned a value of 0, the suspension information indicates the non-suspension of all MRBs of the receiving apparatus that receives the MBS,
When the 1 bit is assigned a value of 1, the suspension information indicates the suspension of all MRBs of the receiving apparatus that receives the MBS;
The second generating unit is configured to generate suspension information, and a total number of bits of the suspension information is the number of all MRBs of the receiving apparatus that receives the MBS, and each bit is assigned a value of 0 or 1;
The bits in the suspension information correspond, from high to low or from low to high, one-to-one with all MRBs in ascending or descending order of the MRB IDs;
For each bit in the suspension information:
   When the bit is assigned a value of 0, the suspension information indicates the suspension of the MRB corresponding to the bit,
   When the bit is assigned a value of 1, the suspension information indicates the non-suspension of the MRB corresponding to the bit;
      or
   When the bit is assigned a value of 0, the suspension information indicates the non-suspension of the MRB corresponding to the bit,
   When the bit is assigned a value of 1, the suspension information indicates the suspension of the MRB corresponding to the bit;
   The third generating unit is configured to generate suspension information, and the suspension information includes one or more MRB IDs. The suspension information is configured to instruct the suspension of the MRBs corresponding to each MRB ID of the one or more MRB IDs.

In one embodiment of the present application, the generating module is configured to include the suspension information in the RRCRelease message.

In one embodiment of the present application, the generating module is configured to include the suspension information in the SuspendConfig information.

In one embodiment of the present application, the generating module is configured to carry the suspension information by control signaling. The control signaling may be NAS signaling, RRC layer signaling, PDCP layer signaling, RLC layer signaling, MAC layer signaling, or PHY layer signaling.

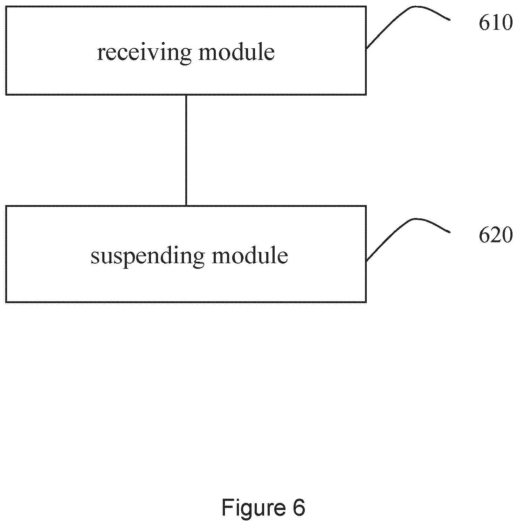

A receiving apparatus is further provided. As shown in Figure 6, the receiving apparatus includes: a receiving module 610 configured to receive suspension information; and a suspending module 620 configured to perform one of the following according to the suspension information: suspend all radio bearers associated with the MBS; do not suspend all radio bearers associated with the MBS; suspend some radio bearers associated with the MBS and do not suspend the remaining radio bearers. Each radio bearer associated with the MBS is an MRB.

Exemplarily, the receiving apparatus is a UE. Exemplarily, the receiving module 610 is configured to receive the suspension information sent by the base station.

In one embodiment of the present application, the receiving module includes: a first receiving unit configured to receive the suspension information included in the RRCRelease message; or a second receiving unit configured to receive the suspension information included in the SuspendConfig information; or a third receiving unit configured to receive the suspension information carried by control signaling, where the control signaling is NAS signaling, RRC layer signaling, PDCP layer signaling, RLC layer signaling, MAC layer signaling, or PHY layer signaling.

In one embodiment of the present application, all MRBs of the receiving apparatus that receives the MBS include all MRBs currently established by the receiving apparatus that receives the MBS or all MRBs currently activated by the receiving apparatus that receives the MBS.

In one embodiment, the suspending module includes a first suspending module. The first suspending module is configured to process the suspension information, and the total number of bits of the suspension information is 1 bit, and the 1 bit is assigned a value of 0 or 1; the first suspending module is configured to: when the 1 bit is assigned a value of 0, suspend all MRBs of the receiving apparatus that receives the MBS, i.e., suspend all MRBs currently established by the receiving apparatus that receives the MBS, or all MRBs currently activated by the receiving apparatus that receives the MBS, when the 1 bit is assigned a value of 1, do not suspend all MRBs of the receiving apparatus that receives the MBS, i.e., do not suspend all MRBs currently established by the receiving apparatus that receives the MBS, or all MRBs currently activated by the receiving apparatus that receives the MBS; or, when the 1 bit is assigned a value of 0, do not suspend all MRBs of the receiving apparatus that receives the MBS, i.e., do not suspend all MRBs currently established by the receiving apparatus that receives the MBS, or all MRBs currently activated by the receiving apparatus that receives the MBS, when the 1 bit is assigned a value of 1, suspend all MRBs of the receiving apparatus that receives the MBS, i.e., suspend all MRBs currently established by the receiving apparatus that receives the MBS, or all MRBs currently activated by the receiving apparatus that receives the MBS.

In one embodiment, the suspending module includes a second suspending module. The second suspending module is configured to process the suspension information, where the total number of bits of the suspension information is the number of all MRBs currently established or all MRBs currently activated by the receiving apparatus that receives the MBS, and each bit is assigned a value of 0 or 1; the bits in the suspension information correspond, from high bit to low bit or from low bit to high bit, one-to-one with all MRBs in ascending or descending order of the MRB IDs currently established or currently activated; the suspending module includes a second suspending module, and the second suspending module is configured to: for each bit in the suspension information, when the bit is assigned a value of 0, suspend the MRB corresponding to the bit, when the bit is assigned a value of 1, not suspend the MRB corresponding to the bit; or when the bit is assigned a value of 0, not suspend the MRB corresponding to the bit, when the bit is assigned a value of 1, suspend the MRB corresponding to the bit.

In one embodiment, the suspending module includes a third suspending module, and the suspension information is configured to process the suspension information. The suspension information includes one or more MRB IDs, and the third suspending module is configured to suspend the MRBs corresponding to each MRB ID among the one or more MRB IDs.

In one embodiment of the present application, it also includes: an indicating module configured to indicate the suspension and/or non-suspension of the radio bearers associated with the MBS to the PDCP layer and/or lower layers of the PDCP layer of the receiving apparatus that receives the MBS.

Exemplarily, the UE is in the RRC_INACTIVE state.

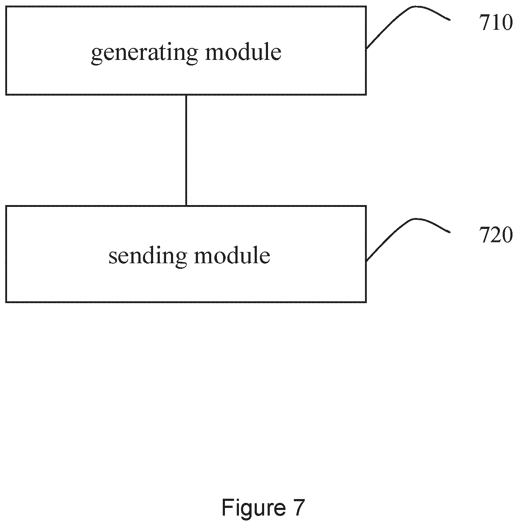

A transmitting apparatus is further provided. As shown in Figure 7, the transmitting apparatus includes: a generating module 710 configured to generate a RRCRelease message; and a sending module 720 configured to send the RRCRelease message. The RRCRelease message includes SuspendConfig information, and the RRCRelease message is configured to instruct the suspension of all radio bearers associated with the MBS, or to indicate the non-suspension of all radio bearers associated with the MBS, or to indicate the suspension of some radio bearers associated with the MBS and the non-suspension of the remaining radio bearers. Each radio bearer associated with the MBS is an MRB.

Exemplarily, the transmitting apparatus is a base station. Exemplarily, the sending module 720 is configured to send a RRCRelease message to the UE to instruct the UE to perform one of the following: suspend all radio bearers associated with the MBS; do not suspend all radio bearers associated with the MBS; suspend some radio bearers associated with the MBS and do not suspend the remaining radio bearers.

In one embodiment of the present application, the RRCRelease message includes SuspendConfig information to indicate the suspension of one or more MRBs of all MRBs and/or the non-suspension of one or more MRBs of all MRBs, i.e., to indicate the receiving apparatus to suspend the radio bearers associated with the MBS, or indicate the receiving apparatus not to suspend the radio bearers associated with the MBS, or to indicate the receiving apparatus to suspend some radio bearers and not to suspend other radio bearers.

In one embodiment of the present application, the RRCRelease message includes SuspendConfig information to indicate the receiving apparatus that receives the MBS to suspend broadcast service radio bearers, or to suspend multicast service radio bearers, or to suspend both broadcast service radio bearers and multicast service radio bearers.

In one embodiment of the present application, the RRCRelease message includes SuspendConfig information to indicate the receiving apparatus that receives the MBS to suspend a first type of MRB for transmitting MBS data, or to suspend a second type of MRB for transmitting MBS control information, or to suspend both the first type of MRB for transmitting MBS data and the second type of MRB for transmitting MBS control information.

In one embodiment of the present application, the RRCRelease message includes SuspendConfig information to indicate the receiving apparatus that receives the MBS to suspend the MRBs currently established by the receiving apparatus, or to suspend the MRBs currently activated by the receiving apparatus.

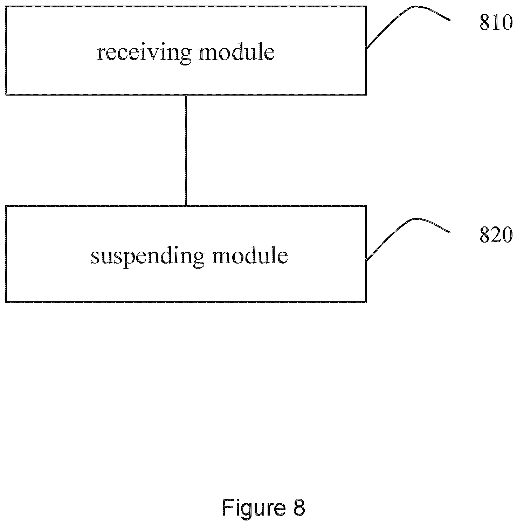

A receiving apparatus is further provided. As shown in Figure 8, the receiving apparatus includes: a receiving module 810 configured to receive a RRCRelease message; and a suspending module 820 configured to determine whether the RRCRelease message includes SuspendConfig information, and if the RRCRelease message includes SuspendConfig information, perform one of the following: suspend all radio bearers associated with the MBS; do not suspend all radio bearers associated with the MBS; suspend some radio bearers associated with the MBS and do not suspend the remaining radio bearers. Each radio bearer associated with the MBS is an MRB.

Exemplarily, the receiving apparatus is a UE. Exemplarily, the receiving module 810 is configured to receive the RRCRelease message sent by the base station, and the suspending module 820 is configured to determine whether the RRCRelease message includes SuspendConfig information, and if the RRCRelease message includes SuspendConfig information, perform one of the following according to the RRCRelease message: suspend all radio bearers associated with the MBS; do not suspend all radio bearers associated with the MBS; suspend some radio bearers associated with the MBS and do not suspend the remaining radio bearers.

In one embodiment of the present application, when the RRCRelease message includes SuspendConfig information, one or more MRBs of all MRBs are suspended and/or one or more MRBS of all MRBs are not suspended. That is, the receiving apparatus suspends all radio bearers associated with the MBS, or the receiving apparatus does not suspend all radio bearers associated with the MBS, or the receiving apparatus suspends some radio bearers and does not suspend other radio bearers after receiving the RRCRelease message.

In one embodiment of the present application, when the RRCRelease message includes SuspendConfig information, broadcast service radio bearers are suspended, or multicast service radio bearers are suspended, or both broadcast service radio bearers and multicast service radio bearers are suspended.

In one embodiment of the present application, when the RRCRelease message includes SuspendConfig information, a first type of MRB for transmitting MBS data is suspended, or a second type of MRB for transmitting MBS control information is suspended, or both the first type of MRB for transmitting MBS data and the second type of MRB for transmitting MBS control information are suspended.

In one embodiment of the present application, when the RRCRelease message includes SuspendConfig information, the MRBs currently established by the receiving apparatus are suspended, or the MRBs currently activated by the receiving apparatus are suspended.

In one embodiment of the present application, it also includes: an indicating module configured to indicate the suspension and/or non-suspension of the radio bearers associated with the MBS to the PDCP layer and/or lower layers of the PDCP layer of the receiving apparatus that receives the MBS.

Exemplarily, the UE is in the RRC_INACTIVE state.

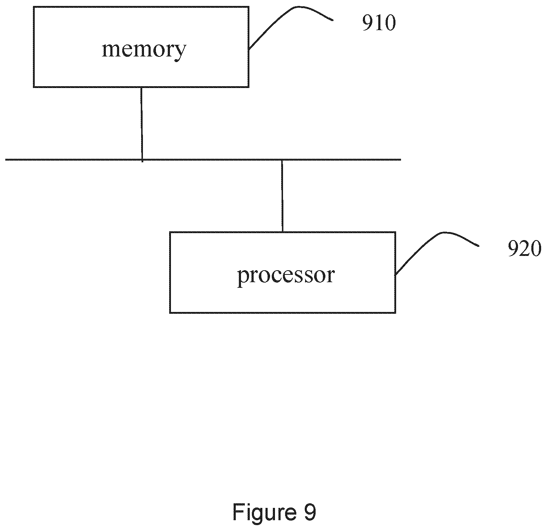

A base station is further provided. As shown in Figure 9, the base station of the present application includes a memory 910, a processor 920, and a computer program stored on the memory and executable on the processor. When the processor 920 executes the program, it implements the MBS processing method described above.

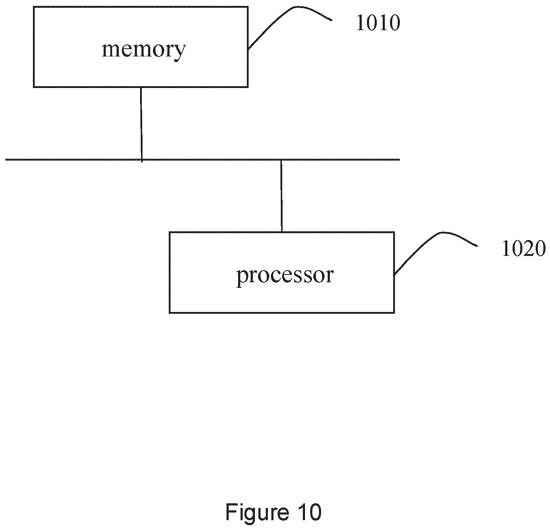

A terminal is further provided. As shown in Figure 10, the terminal of the present application includes a memory 1010, a processor 1020, and a computer program stored on the memory and executable on the processor. When the processor 1010 executes the program, it implements the MBS processing method described above.

The present application also provides a system, comprising the above transmitting apparatus and receiving apparatus.

The present application also provides a computer-readable storage medium for storing program instructions. When the program instructions are executed by a computer, the computer performs the MBS processing method described above.

The present application also provides a computer-readable storage medium for storing program instructions. When the program instructions are executed by a computer, the computer performs the MBS processing method described above.

The present application also provides the following embodiments.

### Embodiment One:

This embodiment generates suspension information. The suspension information is configured to instruct the suspension of all MRBs associated with the MBS.

The format of the generated suspension message may be:
Number of bits: 1 bit
Value: 0/1.

When the 1 bit is assigned a value of 0, the suspension information indicates the suspension of the MRBs. Optionally, the suspension information indicates the suspension of all MRBs currently established and/or currently activated in the current communication system;
When the 1 bit is assigned a value of 1, the suspension information indicates the non-suspension of the MRBs. Optionally, the suspension information indicates the non-suspension of all MRBs currently established and/or currently activated in the current communication system;
   or,
When the 1 bit is assigned a value of 1, the suspension information indicates the suspension of the MRBs. Optionally, the suspension information indicates the suspension of all MRBs currently established and/or currently activated in the current communication system;
When the 1 bit is assigned a value of 0, the suspension information indicates the non-suspension of the MRBs. Optionally, the suspension information indicates the non-suspension of all MRBs currently established and/or currently activated in the current communication system.

The carrier of the suspension message may be any of the following, but is not limited to the following:
Include the suspension information in the RRCRelease message; or
Include the suspension information in the SuspendConfig information; or
Carry the suspension information by control signaling, where the control signaling may be NAS signaling, RRC layer signaling, PDCP layer signaling, RLC layer signaling, MAC layer signaling, or PHY layer signaling. Optionally, if the control signaling is MAC layer signaling, the suspension information may be implemented as MAC CE; or
The suspension information is defined upon by the protocol and is a fixed value, and this message does not need to be sent.

The operation of the transmitting apparatus, such as the Radio Access Network (RAN), is as follows:
If the suspension information is carried by the RRCRelease message, SuspendConfig information, or control signaling, the transmitting apparatus generates the suspension information and sends the suspension information by corresponding signaling carrier; or
If the suspension information is defined upon by the protocol and is a fixed value, the base station does not need to additionally generate suspension information.

The operation of the receiving apparatus, such as the UE, is as follows:
According to the value assigned in the suspension information, the receiving apparatus suspends all MRBs currently established by the receiving apparatus and/or all MRBs currently activated by the receiving apparatus, or the receiving apparatus does not suspend all MRBs currently established by the receiving apparatus and/or all MRBs currently activated by the receiving apparatus.

For example, if the first assignment method is used to generate the suspension information, after the receiving apparatus receives the suspension information:
When the bit of the suspension information is assigned a value of 0, the receiving apparatus suspends all MRBs currently established by the receiving apparatus and/or all MRBs currently activated by the receiving apparatus;
When the bit of the suspension information is assigned a value of 1, the receiving apparatus does not suspend all MRBs currently established by the receiving apparatus and/or all MRBs currently activated by the receiving apparatus.

If the second assignment method is used to generate the suspension information, after the receiving apparatus receives the suspension information:
When the bit of the suspension information is assigned a value of 1, the receiving apparatus suspends all MRBs currently established by the receiving apparatus and/or all MRBs currently activated by the receiving apparatus;
When the bit of the suspension information is assigned a value of 0, the receiving apparatus does not suspend all MRBs currently established by the receiving apparatus and/or all MRBs currently activated by the receiving apparatus.

Optionally, the receiving apparatus may indicate the suspension and/or non-suspension status to the PDCP layer and/or multiple protocol layers below the PDCP of the receiving apparatus. Accordingly, the receiving apparatus performs subsequent operations such as parameter reset, message clearing, and counting from zero.

### Embodiment Two:

This embodiment generates suspension information. The suspension information is configured to instruct the suspension of the MRBs associated with the MBS.

The format of the generated suspension message may be:
Number of bits: It may be the number of all MRBs currently established by the receiving apparatus or the number of all MRBs currently activated by the receiving apparatus.

If the total number of bits of the suspension message is the number of all MRBs currently established by the receiving apparatus,
Then, all bits in the suspension message from high to low or from low to high correspond one-to-one with all MRBs currently established by the receiving apparatus in ascending or descending order of MRB IDs.

If the total number of bits of the suspension message is the number of all MRBs currently activated by the receiving apparatus,
Then, all bits in the suspension message from high to low or from low to high correspond one-to-one with all MRBs currently activated by the receiving apparatus in ascending or descending order of MRB IDs.

For each bit:
Value: 0/1.

When the bit is assigned a value of 0, the suspension information indicates the suspension of the MRB corresponding to the bit according to the corresponding method described above;
When the bit is assigned a value of 1, the suspension information indicates the non-suspension of the MRB corresponding to the bit according to the corresponding method described above.
   or,
When the bit is assigned a value of 1, the suspension information indicates the suspension of the MRB corresponding to the bit according to the corresponding method described above;
When the bit is assigned a value of 0, the suspension information indicates the non-suspension of the MRB corresponding to the bit according to the corresponding method described above.

The carrier of transmitting the suspension message may be any of the following, but is not limited to the following:
Include the suspension information in the RRCRelease message; or
Include the suspension information in the SuspendConfig information; or
Carry the suspension information by control signaling, where the control signaling may be NAS signaling, RRC layer signaling, PDCP layer signaling, RLC layer signaling, MAC layer signaling, or PHY layer signaling. Optionally, if the control signaling is MAC layer signaling, the suspension information may be implemented as MAC CE; or
The suspension information is defined upon by the protocol and is a fixed value, and this message does not need to be sent.

The operation of the transmitting apparatus, such as the RAN, is as follows:
If the suspension information is carried by the RRCRelease message, SuspendConfig information, or control signaling, the transmitting apparatus generates the suspension information and sends the suspension information through the corresponding signaling carrier; or if the suspension information is defined upon by the protocol and is a fixed value, the base station does not need to additionally generate suspension information.

The operation of the receiving apparatus, such as the UE, is as follows:
For each bit in the suspension information, the receiving apparatus suspends or does not suspend the MRB corresponding to the bit according to the value assigned to the bit.

For example, if the first assignment method is used to generate the suspension information, after the receiving apparatus receives the suspension information:
When the bit in the suspension information is assigned a value of 0, the receiving apparatus suspends the MRB corresponding to the bit according to the corresponding method described above;
When the bit in the suspension information is assigned a value of 1, the receiving apparatus does not suspend the MRB corresponding to the bit according to the corresponding method described above;
If the second assignment method is used to generate the suspension information, after the receiving apparatus receives the suspension information:
   When the bit in the suspension information is assigned a value of 1, the receiving apparatus suspends the MRB corresponding to the bit according to the corresponding method described above;
   When the bit in the suspension information is assigned a value of 0, the receiving apparatus does not suspend the MRB corresponding to the bit according to the corresponding method described above.

Optionally, for each MRB indicated in the MRB ID list in the suspension information, if the receiving apparatus has established the MRB and the MRB is currently activated, it suspends the MRB. If the receiving apparatus has not established the MRB or the MRB is not currently activated, it ignores the MRB ID.

Optionally, the receiving apparatus may indicate the suspension and/or non-suspension status to the PDCP layer and/or multiple protocol layers below the PDCP of the receiving apparatus. Accordingly, it performs subsequent operations such as parameter reset, message clearing, and counting from zero.

### Embodiment Three:

This embodiment generates suspension information. The suspension information is configured to instruct the suspension of the MRBs associated with the MBS.

The format of the generated suspension message may be:
Number of bits: It is the number of MRB IDs to suspend or not to suspend as indicated by the suspension information. Optionally, it may also include a value that indicates the total number of MRB IDs included in the suspension information.

Value: MRB ID list.

The generated suspension information includes one or more MRB IDs to indicate the suspension of the MRBs corresponding to the MRB IDs included in the suspension information.

The carrier of transmitting the suspension message may be any of the following, but is not limited to the following:
Include the suspension information in the RRCRelease message; or
Include the suspension information in the SuspendConfig information; or
Carry the suspension information by control signaling, where the control signaling may be NAS signaling, RRC layer signaling, PDCP layer signaling, RLC layer signaling, MAC layer signaling, or PHY layer signaling. Optionally, if the control signaling is MAC layer signaling, the suspension information may be implemented as MAC CE; or
The suspension information is defined upon by the protocol and is a fixed value, and this message does not need to be sent.

The operation of the transmitting apparatus, such as the RAN, is as follows:
If the suspension information is carried by the RRCRelease message, SuspendConfig information, or control signaling, the transmitting apparatus generates the suspension information and sends the suspension information through the corresponding signaling carrier; or
If the suspension information is defined upon by the protocol and is a fixed value, the base station does not need to additionally generate suspension information.

The operation of the receiving apparatus, such as the UE, is as follows:
According to the MRB IDs included in the suspension information, the receiving apparatus suspends each MRB indicated by the MRB ID list included in the suspension information.

For each MRB indicated by the MRB ID list in the suspension information, if the receiving apparatus has established the MRB and the MRB is currently activated, it suspends the MRB. If the receiving apparatus has not established the MRB or the MRB is not currently activated, it ignores the MRB ID.

Optionally, the receiving apparatus may indicate the suspension and/or non-suspension status to the PDCP layer and/or multiple protocol layers below the PDCP of the receiving apparatus. Accordingly, it performs subsequent operations such as parameter reset, message clearing, and counting from zero.

In the above embodiments, it may be fully or partially implemented through software, hardware, firmware, or any combination thereof. When implemented in software, it may be fully or partially implemented in the form of a computer program product. The computer program product includes one or more computer instructions. When the computer program instructions are loaded and executed on a computer, the computer performs all or part of the process or functions according to the embodiments of the present application. The computer may be a general-purpose computer, a special-purpose computer, a computer network, or other programmable devices. The computer instructions may be stored on a computer-readable storage medium or transmitted from one computer-readable storage medium to another computer-readable storage medium, for example, from one website, computer, server, or data center to another website, computer, server, or data center through wired (e.g., coaxial cable, optical fiber, digital subscriber line) or wireless (e.g., infrared, wireless, microwave, etc.) means. The computer-readable storage medium may be any available medium that a computer may access or a data storage device that integrates one or more available media such as servers and data centers. Available media may be magnetic media (e.g., floppy disks, hard disks, magnetic tapes), optical media (e.g., digital video discs (DVD)), or semiconductor media (e.g., solid-state drives (SSD)), etc.

Ordinary skilled in the art may realize that multiple exemplary units and algorithm steps described in conjunction with the embodiments disclosed herein may be implemented in electronic hardware, computer software, or a combination of both. Whether these functions are executed as hardware or software depends on the specific application and design constraints of the technical solution. Professional and technical personnel may use different methods to realize the described functions for each specific application, but such realization should not be regarded as exceeding the scope of the present application.

## Claims

1. An MBS processing method, comprising:
a base station generating suspension information and sending the suspension information to a user equipment (UE), wherein the suspension information is configured to instruct the UE to suspend all radio bearers associated with a multicast/broadcast service (MBS), or is configured to instruct the UE not to suspend all the radio bears associated with the MBS, or is configured to instruct the UE to suspend some of all the radio bearers associated with the MBS and not to suspend the remaining radio bearers among all the radio bearers;
wherein, each radio bearer associated with the MBS is a multicast/broadcast radio bearer (MRB).

2. The method according to claim 1, wherein all the MRBs of the UE receiving the MBS include all the MRBs currently established by the UE or all the MRBs currently activated by the UE.

3. The suspension method according to claim 1 or 2, wherein a total number of bits of the suspension information is 1 bit, and the 1 bit is assigned with a value of 0 or 1;
in the case where the 1 bit is assigned a value of 0, the suspension information is configured to instruct the UE receiving the MBS to suspend all MRBs of the UE,
in the case where the 1 bit is assigned a value of 1, the suspension information is configured to instruct the UE not to suspend all MRBs of the UE;
or
in the case where the 1 bit is assigned a value of 0, the suspension information is configured to instruct the UE receiving the MBS not to suspend all MRBs of the UE,
in the case where the 1 bit is assigned a value of 1, the suspension information is configured to instruct the UE receiving the MBS to suspend all MRBs of the UE.

4. The suspension method according to claim 1 or 2, wherein a total number of bits of the suspension information is the number of all MRBs of the UE, and each bit is assigned a value of 0 or 1;
the bits in the suspension information correspond, in the order from the most significant bit to the least significant bit or from the least significant bit to the most significant bit, one-to-one with all MRBs in ascending or descending order of MRB identifiers (ID);
for each bit in the suspension information:
in the case where the bit is assigned a value of 0, the suspension information is configured to instruct the UE receiving the MBS to suspend the MRB corresponding to the bit,
in the case where the bit is assigned a value of 1, the suspension information is configured to instruct the UE receiving the MBS not to suspend the MRB corresponding to the bit;
or
in the case where the bit is assigned a value of 0, the suspension information is configured to instruct the UE receiving the MBS not to suspend the MRB corresponding to the bit,
in the case where the bit is assigned a value of 1, the suspension information is configured to instruct the UE receiving the MBS to suspend the MRB corresponding to the bit.

5. The suspension method according to claim 1, wherein the suspension information includes at least one MRB ID, and the suspension information is configured to instruct the UE receiving the MBS to suspend the MRB corresponding to each MRB ID of the at least one MRB ID.

6. The suspension method according to claim 1, wherein the suspension information is included in a Radio Resource Control Release (RRCRelease) message;
or
the suspension information is included in SuspendConfig information;
or
the suspension information is carried by control signalling, wherein the control signalling is Non-Access Stratum (NAS) signalling, Radio Resource Control (RRC) layer signalling, Packet Data Convergence Protocol (PDCP) layer signalling, Radio Link Control (RLC) layer signalling, Medium Access Control (MAC) layer signalling, or Physical layer (PHY) signalling.

7. An MBS processing method, comprising:
a user equipment (UE) receiving suspension information;
the UE performing one of the following according to the suspension information: suspending all radio bearers associated with a multicast/broadcast service (MBS); not suspending all radio bearers associated with the MBS; suspending some of all the radio bearers associated with the MBS and not suspending the remaining radio bearers among all the radio bearers;
wherein, each radio bearer associated with the MBS is a multicast/broadcast radio bearer (MRB).

8. The suspension method according to claim 7, wherein the UE receiving the suspension information comprises:
the UE receiving the suspension information included in a Radio Resource Control Release (RRCRelease) message;
or
the UE receiving the suspension information included in SuspendConfig information;
or
the UE receiving the suspension information carried by control signaling, wherein the control signaling is Non-Access Stratum (NAS) signaling, Radio Resource Control (RRC) layer signaling, Packet Data Convergence Protocol (PDCP) layer signaling, Radio Link Control (RLC) layer signaling, Medium Access Control (MAC) layer signaling, or Physical layer (PHY) signaling.

9. The method according to claim 7, wherein all MRBs of the UE receiving the MBS include all the MRBs currently established by the UE or all the MRBs currently activated by the UE.

10. The method according to claim 7 or 9, wherein a total number of bits of the suspension information is 1 bit, and the 1 bit is assigned a value of 0 or 1;
the UE performing one of the following according to the suspension information: suspending all radio bearers; not suspending all radio bearers; suspending some of all the radio bearers and not suspending the remaining radio bearers among all the radio bearers, comprises:
in the case where the 1 bit is assigned a value of 0, the UE suspending all MRBs of the UE.
in the case where the 1 bit is assigned a value of 1, the UE not suspending all MRBs of the UE;
or
in the case where the 1 bit is assigned a value of 0, the UE not suspending all MRBs of the UE,
in the case where the 1 bit is assigned a value of 1, the UE suspending all MRBs of the UE.

11. The method according to claim 7 or 9, wherein the UE performing one of the following according to the suspension information: suspending all radio bearers; not suspending all radio bearers; suspending some of the radio bearers and not suspending the remaining radio bearers among all the radio bearers, comprises:
a total number of bits of the suspension information is the number of all MRBs of the UE, and each bit is assigned a value of 0 or 1;
the bits in the suspension information correspond, in the order from the most significant bit to the least significant bit or from the least significant bit to the most significant bit, one-to-one with all MRBs in ascending or descending order of the MRB identifiers (ID);
for each bit in the suspension information:
in the case where the bit is assigned a value of 0, the UE suspending the MRB corresponding to the bit,
in the case where the bit is assigned a value of 1, the UE not suspending the MRB corresponding to the bit;
or
in the case where the bit is assigned a value of 0, the UE not suspending the MRB corresponding to the bit,
in the case where the bit is assigned a value of 1, the UE suspending the MRB corresponding to the bit.

12. The method according to claim 7, wherein the UE performing one of the following according to the suspension information: suspending all radio bearers; not suspending all radio bearers; suspending some of all the radio bearers and not suspending the remaining radio bearers among all the radio bearers, comprises:
in the case where the suspension information includes at least one MRB ID, the UE suspending the MRB corresponding to each MRB ID of the at least one MRB ID.

13. The method according to claim 7, wherein the UE is in a RRC_INACTIVE state.

14. An MBS processing method, comprising:
a base station generating a Radio Resource Control Release (RRCRelease) message and sending the RRCRelease message to a user equipment (UE), wherein the RRCRelease message includes SuspendConfig information, the RRCRelease message is configured to instruct the UE to suspend all radio bearers associated with the MBS; or the RRCRelease message is configured to instruct the UE not to suspend all radio bearers associated with the MBS; or the RRCRelease message is configured to instruct the UE to suspend some of all the radio bearers associated with the MBS and not to suspend the remaining radio bearers among all the radio bearers;
wherein, each radio bearer associated with the MBS is a multicast/broadcast radio bearer (MRB).

15. The method according to claim 14, wherein all the MRBs include at least one of the following:
a broadcast service radio bearer;
a multicast service radio bearer;
a first type of MRB for transmitting data of the MBS;
a second type of MRB for transmitting control information of the MBS;
the MRBs currently established by the UE or the MRBs currently activated by the UE.

16. An MBS processing method, comprising:
a user equipment (UE) receiving a Radio Resource Control Release (RRCRelease) message;
the UE determining whether the RRCRelease message includes SuspendConfig information, and in response to determining that the RRCRelease message includes the SuspendConfig information, the UE performing one of the following according to the RRCRelease message: suspending all radio bearers associated with a multicast/broadcast service (MBS); not suspending all radio bearers associated with the MBS; suspending some of all the radio bearers associated with the MBS and not suspending the remaining radio bearers among all the radio bearers;
wherein, each radio bearer corresponding to the MBS is a multicast/broadcast radio bearer (MRB).

17. The suspension method according to claim 16, wherein all MRBs include at least one of the following:
a broadcast service radio bearer;
a multicast service radio bearer;
a first type of MRB for transmitting data of the MBS;
a second type of MRB for transmitting control information of the MBS;
the MRBs currently established by the UE or the MRBs currently activated by the UE.

18. The suspension method according to claim 17, wherein the UE is in a RRC_INACTIVE state.

19. A transmitting apparatus, applied to a base station, comprising:
a generating module configured to generate suspension information;
a transmitting module configured to send the suspension information to a user equipment (UE);
wherein, the suspension information is configured to instruct the UE to suspend all radio bearers associated with a multicast/broadcast service (MBS), or the suspension information is configured to instruct the UE not to suspend all radio bearers associated with the MBS, or the suspension information is configured to instruct the UE to suspend some of all the radio bearers associated with the MBS and not to suspend the remaining radio bearers among all the radio bearers;
wherein, each radio bearer associated with the MBS is a multicast/broadcast radio bearer (MRB).

20. The transmitting apparatus according to claim 19, wherein all MRBs of the UE receiving the MBS include all MRBs currently established by the UE, or all MRBs currently activated by the UE;
the generating module comprises: a first generating unit, a second generating unit, or a third generating unit;
the first generating unit is configured to generate the suspension information, wherein a total number of bits of the suspension information is 1 bit, and the 1 bit is assigned a value of 0 or 1;
in the case where the 1 bit is assigned a value of 0, the suspension information is configured to instruct the UE receiving the MBS to suspend all MRBs of the UE,
in the case where the 1 bit is assigned a value of 1, the suspension information is configured to instruct the UE receiving the MBS not to suspend all MRBs of the UE;
or
in the case where the 1 bit is assigned a value of 0, the suspension information is configured to instruct the UE receiving the MBS not to suspend all MRBs of the UE;
in the case where the 1 bit is assigned a value of 1, the suspension information is configured to instruct the UE receiving the MBS to suspend all MRBs of the UE;
the second generating unit is configured to generate the suspension information, wherein a total number of bits of the suspension information is the number of all MRBs of the UE, and each bit is assigned a value of 0 or 1;
the bits in the suspension information correspond, in the order from the most significant bit to the least significant bit or from the least significant bit to the most significant bit, one-to-one with all MRBs in ascending or descending order of the MRB identifiers (ID);
for each bit in the suspension information:
in the case where the bit is assigned a value of 0, the suspension information is configured to instruct the UE receiving the MBS to suspend the MRB corresponding to the bit,
in the case where the bit is assigned a value of 1, the suspension information is configured to instruct the UE receiving the MBS not to suspend the MRB corresponding to the bit;
or
in the case where the bit is assigned a value of 0, the suspension information is configured to instruct the UE receiving the MBS not to suspend the MRB corresponding to the bit,
in the case where the bit is assigned a value of 1, the suspension information is configured to instruct the UE receiving the MBS to suspend the MRB corresponding to the bit;
the third generating unit is configured to generate the suspension information, wherein the suspension information comprises at least one MRB ID, and the suspension information is configured to instruct the UE receiving the MBS to suspend the MRB corresponding to each MRB ID of the at least one MRB ID.

21. The transmitting apparatus according to claim 19, wherein the generating module is configured to include the suspension information in a Radio Resource Control Release (RRCRelease) message;
or
include the suspension information in SuspendConfig information;
or
carry the suspension information by control signaling, wherein the control signaling is Non-Access Stratum (NAS) signaling, Radio Resource Control (RRC) layer signaling, Packet Data Convergence Protocol (PDCP) layer signaling, Radio Link Control (RLC) layer signaling, Medium Access Control (MAC) layer signaling, or Physical layer (PHY) signaling.

22. A receiving apparatus, applied to a user equipment (UE), comprising:
a receiving module configured to receive suspension information;
a suspension module configured to perform one of the following according to the suspension information: suspending all radio bearers associated with the multicast/broadcast service (MBS); not suspending all radio bearers associated with the MBS; suspending some of all the radio bearers associated with the MBS and not suspending the remaining radio bearers among all the radio bearers;
Wherein, each radio bearer associated with the MBS is a multicast/broadcast radio bearer (MRB).

23. The receiving apparatus according to claim 22, wherein the receiving module comprises:
a first receiving unit configured to receive the suspension information included in a Radio Resource Control Release (RRCRelease) message;
or
a second receiving unit configured to receive the suspension information included in SuspendConfig information;
or
a third receiving unit configured to receive the suspension information carried by control signaling, wherein the control signaling is Non-Access Stratum (NAS) signaling, Radio Resource Control (RRC) layer signaling, Packet Data Convergence Protocol (PDCP) layer signaling, Radio Link Control (RLC) layer signaling, Medium Access Control (MAC) layer signaling, or Physical layer (PHY) signaling.

24. The receiving apparatus according to claim 22, wherein all MRBs of the UE receiving the MBS comprise all MRBs currently established by the UE or all MRBs currently activated by the UE;
the suspension module comprises: a first suspension module, a second suspension module, or a third suspension module; the first suspension module is configured to process the suspension information, wherein a total number of bits of the suspension information is 1 bit, and the 1 bit is assigned a value of 0 or 1;
the first suspension module is configured to:
in the case where the 1 bit is assigned a value of 0, suspend all MRBs of the UE, in the case where the 1 bit is assigned a value of 1, not suspend all MRBs of the UE;
or
in the case where the 1 bit is assigned a value of 0, not suspend all MRBs of the UE; in the case where the 1 bit is assigned a value of 1, suspend all MRBs of the UE;
the second suspension module is configured to process the suspension information, wherein a total number of bits of the suspension information is the number of all MRBs of the UE, and each bit is assigned a value of 0 or 1;
the bits in the suspension information correspond, in the order from the most significant bit to the least significant bit or from the least significant bit to the most significant bit, one-to-one with all MRBs in ascending or descending order of the MRB identifiers (ID);
the second suspension module is configured to: for each bit in the suspension information:
in the case where the bit is assigned a value of 0, suspend the MRB corresponding to the bit, in the case where the bit is assigned a value of 1, not suspend the MRB corresponding to the bit;
or
in the case where the bit is assigned a value of 0, not suspend the MRB corresponding to the bit,
in the case where the bit is assigned a value of 1, suspend the MRB corresponding to the bit;
the third suspension module is configured to process the suspension information, wherein the suspension information includes at least one MRB ID, and the third suspension module is configured to suspend the MRB corresponding to each MRB ID of the at least one MRB ID.

25. The receiving apparatus according to claim 22, wherein the UE is in a RRC_INACTIVE state.

26. A transmitting apparatus, applied to a base station, comprising:
a generating module configured to generate a Radio Resource Control Release (RRCRelease) message;
a transmitting module configured to send the RRCRelease message to a user equipment (UE), wherein the RRCRelease message comprises SuspendConfig information, and the RRCRelease message is configured to instruct the UE to suspend all radio bearers associated with a multicast/broadcast service (MBS); or the RRCRelease message is configured to instruct the UE does not to suspend all radio bearers associated with the MBS; or the RRCRelease message is configured to instruct the UE to suspend some of the radio bearers associated with the MBS and not to suspend the remaining radio bearers among all the radio bearers;
wherein, each radio bearer associated with the MBS is a multicast/broadcast radio bearer (MRB).

27. The transmitting apparatus according to claim 26, wherein all MRBs comprise at least one of the following:
a broadcast service radio bearer;
a multicast service radio bearer;
a first type of MRB for transmitting data of the MBS;
a second type of MRB for transmitting control information of the MBS;
the MRBs currently established by the UE or the MRBs currently activated by the UE.

28. A receiving apparatus, applied to a user equipment (UE), comprising:
a receiving module configured to receive a Radio Resource Control Release (RRCRelease) message;
a suspension module configured to determine whether the RRCRelease message comprises SuspendConfig information, and in response to determining that the RRCRelease message comprises SuspendConfig information, perform one of the following according to the RRCRelease message: suspend all radio bearers associated with the MBS; not suspend all radio bearers associated with the MBS; suspend some of all the radio bearers associated with the MBS and not suspend the remaining radio bearers among all the radio bearers;
wherein, each radio bearer associated with the MBS is a multicast/broadcast radio bearer (MRB).

29. The receiving apparatus according to claim 28, wherein all MRBs include at least one of the following:
a broadcast service radio bearer;
a multicast service radio bearer;
a first type of MRB for transmitting data of the MBS;
a second type of MRB for transmitting control information of the MBS;
the MRBs currently established by the UE or the MRBs currently activated by the UE.

30. The receiving apparatus according to claim 28, wherein the UE is in a RRC INACTIVE state.

31. A base station, comprising a processor and a memory, wherein the memory is configured to store a computer program, and when the computer program is executed by the processor, the processor implements the method according to any one of claims 1-6 and claims 14-15.

32. A terminal, comprising a processor and a memory, wherein the memory is configured to store a computer program, and when the computer program is executed by the processor, the processor implements the method according to any one of claims 7-13 and claims 16-18.

33. A computer-readable storage medium, comprising a computer program, wherein when the computer program is executed by a processor, the processor implements the method according to any one of claims 1-18.
